# EUROPÄISCHE PATENTANMELDUNG

(11) **EP 1 188 664 A2**
(43) Veröffentlichungstag der Anmeldung: **20.03.2002**
(21) Anmeldenummer: 01121407.9
(22) Anmeldetag: 07.09.2001
(51) Int. Cl.: B64C 1/14

(54) **Flugzeugtürfenster eines Verkehrsflugzeuges**

(30) Priorität: 19.09.2000 DE 10046568
(71) Anmelder: Airbus Deutschland GmbH, 21129 Hamburg (DE)
(72) Erfinder: Uhlmann, Sven, Dipl.-Ing., 25436 Uetersen (DE); Race, Michael, 21244 Buchholz (DE)
(74) Vertreter: Hansmann, Dierk, Dipl.-Ing.

(57) **Zusammenfassung**

Die Erfindung bezieht sich auf ein Flugzeugtürfenster eines Verkehrsflugzeuges gemäß dem Oberbegriff des Anspruchs 1. Mit ihr wird das Flugzeugtürfenster, welches dem negativen Konturenverlauf am Flugzeugrumpf-Einbauort folgt und somit eine entsprechend angepasste Fensterneigung aufweist, eine Verbesserung der Sichtverhältnisse nach außerhalb der Flugzeugumgebung, insbesondere nach der unterhalb des Flugzeugfensters gelegenen Rumpfsektion, umsetzen.

Das Flugzeugtürfenster eines Verkehrsflugzeuges besteht aus einer Außenscheibe (1) und einer Innenscheibe (2), die scheibenumfänglich innerhalb einem Türfensterrahmen aufliegen. Letztere schließen einen hohlen Scheibenzwischenraum (5) einschließen. Am Umfang der beiden Fensterscheiben (1,2) ist eine Fensterdichtung (4) befestigt, die auf dem inneren Umfang des Türfensterrahmens platziert ist, welche gegen den Fensterscheibenrand und gegen den Türfensterrahmen luftundurchlässig dichtet. Innerhalb dem Scheibenzwischenraum (5) ist eine Zwischenscheibe (3), die weitestgehend flächendeckend als ein optischer Linsenkörper ausgebildet ist, angeordnet, welche flächenparallel den Scheibenflächen der Außen- und Innenscheibe (1,2) positioniert ist.

## Beschreibung

Die Erfindung bezieht sich auf ein Flugzeugtürfenster eines Verkehrsflugzeuges gemäß dem Oberbegriff des Anspruchs 1. Mit ihr wird das Flugzeugtürfenster, welches dem negativen Konturenverlauf am Flugzeugrumpf-Einbauort folgt und somit eine entsprechend angepasste Fenstemeigung aufweist, eine Verbesserung der Sichtverhältnisse nach außerhalb der Flugzeugumgebung, insbesondere nach der unterhalb des Flugzeugfensters gelegenen Rumpfsektion, umsetzen.

Es ist der Fachwelt bekannt, dass die gegenwärtig eingesetzten Kabinenfenster im Passagier-Flugzeugbau einen Doppelscheiben-Aufbau (Fail Save Aufbau) besitzen, bei dem zwei Kabinenfensterscheibeneinen Scheibenzwischenraum (Hohlraum) einschließen. Der Vollständigkeit halber wird mit ergänzt, dass sich an der Unterseite der Innenfensterscheibe eine Ventilationsbohrung (Ausgleichsbohrung) befindet, um im Scheibenzwischenraum während des Fluges, insbesondere beim Steig- und Sinkflug eines Passagierflugzeuges, einen Druckausgleich zu realisieren, worauf nicht näher eingegangen wird. Der Scheibenaufbau ist scheibenumfänglich einem Fennsterscheiben-Rahmen, welcher einer der Flugzeug-Rumpfstruktur ausgenommenen Öffnung eingepasst und mit dieser mechanisch verbunden wird, befestigt, wobei eine Fensterdichtung diese Doppelscheiben-Anordnung im Bereich ihrer Auflage gegen den Fensterrahmen luftundurchlässig dichtet. Diesem genannten Fensterscheiben-Aufbau für ein Passagier-Flugzeug wird man beispielsweise auch in den Druckschriften "DE 198 06 106 C1, DE 198 06 107 A1 und DE 198 06 108 A1" begegnen, wobei druckschriftlich nicht explizit auf ein Flugzeugtürfenster hingewiesen wird. Aufgrund der Tatsache, dass bei Passagierflugzeugen, deren Fußböden in Relation zur Außenkontur sehr hoch angeordnet sind, wird man einen negativen Konturenverlaufes der Flugzeugrumpfstruktur am Flugzeugfenster-Einbauort und der daraus resultierenden Fensterneigung im Fensterbereich einer Flugzeugtür beobachten. Um einerseits bei einem Passagierflugzeug (im Normalfall) eine (geordnete) Aufnahme oder ein (geordnetes) Verfassen von mitreisenden oder mitgereisten Passagieren umzusetzen, besteht (auch aufgrund von einzuhaltenden Sicherheitsvorschriften zwingend) die Notwendigkeit, dass vor dem Öffnen der Flugzeugtür eine an das Flugzeug angelegte Treppe (Runway) oder ein Board-Finger oder andererseits (im Notfall) eine Notrutsche von den Fiugbegleitern einsehbar sein muß. Bei den bekannten Airbus-Erzeugnissen "A319, A320, A321" (Single Aisle Programm) wird man diesen stark negativen Konturenverlauf an einer (sogenannten) Tür 1 beobachten. In diesem Fensterbereich werden die vorgeschriebenen Sichtverhältnisse mit einem dicken und entsprechend schweren Prisma realisiert. Andere Flugzeughersteller setzten wegen der (in diesem Türfensterbereich) benötigten Sichtverhältnisse aufwendige Spiegelmechanismen oder Volllinsen zur Umsetzung der erwähnten Sicherheitsvorschrift ein.

Demzufolge liegt der Erfindung die Aufgabe zugrunde, eine Lösung für ein Flugzeugtürfenster eines Verkehrsflugzeuges bereitzustellen, mit der man ohne besonderen Aufwand für das Flugzeugtürfenster ausreichende Sichtverhältnisse nach außerhalb der Flugzeugumgebung, insbesondere nach der unterhalb des Flugzeugfensters gelegenen Rumpfsektion, weitestgehend störungsfrei umsetzen wird.

Die Aufgabe wird durch die im Anspruch 1 angegebenen Maßnahmen gelöst. In den weiteren Ansprüchen sind zweckmäßige Weiterbildungen und Ausgestaltungen dieser Maßnahmen angegeben.

Die Erfindung ist in einem Ausführungsbeispiel anhand der beigefügten Zeichnungen näher eriäutert. Es zeigen
- Fig. 1: die Vorderansicht des Flugzeugtürfensters;
- Fig. 2: den Schnitt A - A des Flugzeugtürfensters (Seitenansicht).

-Bereits anfänglich der Beschreibung wird auf den herkömmlich eingesetzten Doppelscheiben-Aufbau eines Kabinenfensters (Fail Safe Aufbau) eingegangen, der gemäß diesem Vorbild für das nachfolgend beschriebene Flugzeugtürfenster erhalten bleiben wird.

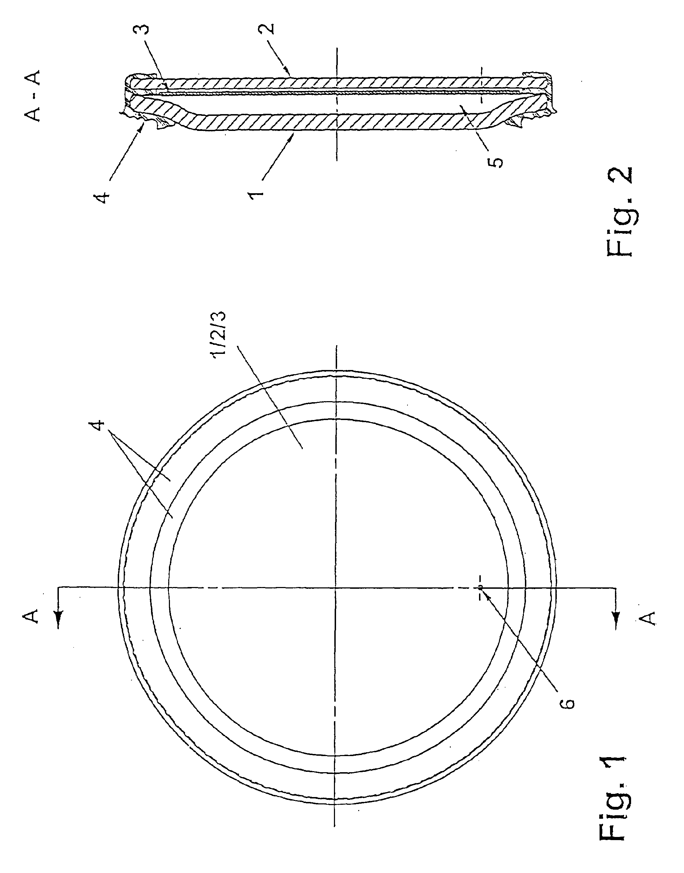

In der Fig. 1 wird nun die Vorderansicht des Flugzeugtürfensters vorgestellt. Das Türfenster besteht demnach aus einer Außenscheibe 1 und eine Innenscheibe 2, die scheibenumfänglich innerhalb einer Türfensterdichtung 4, genauer den Schenkeln der Türfensterdichtung 4, aufliegen, die den erwähnten hohlen Scheibenzwischenraum 5 (Hohlraum) einschließen. Die beiden Fensterscheiben sind durch die Fensterdichtung 4 nach Einbau der Scheiben umlaufend luftundurchlässig abgedichtet. Die horizontal zum Rumpfinnenbereich weisenden Schenkel der Außen- und Innenscheibe 1, 2 sind mittig einem vertikalen (kreisrunden) Rahmenteil des zeichnerisch nicht dargestellten Türfensterrahmens befestigt, wobei dieses Rahmenteil außenumfänglich einer (der kreisrunden Gestalt angepassten) Öffnung, die der Türstruktur ausgenommen ist, eingepasst ist und randseitlich der Öffnung mit der Türstruktur verbunden (also mechanisch befestigt) ist. Auf den Türfensterrahmen und dessen Befestigung wird nicht näher eingegangen, weil er keinen Beitrag zur Gewährleistung respektive zur Verbesserung der Sichtverhältnisse nach außerhalb des Flugzeugrumpfes gemäß dem eingangs angegebenen Problem leistet. Damit wird man den sogenannten Fail Safe Aufbau der Doppelscheiben-Anordnung feststellen, auf dessen unverändert beizubehaltende Konfiguration die nachfolgend angegebene Lösung zur Lösung des vorgenannten Problems zurückgreift.

Um nun zu dem Flugzeugtürfenster mit integrierter Vorkehrung für einen erweiterten Sichtbereich zu gelangen, wird nach der Seitenansicht (dem Schnitt A -A) der Fig. 2, die im Vergleich der Fig. 1 deren Positionierung besser sichtbar macht, innerhalb dem Scheibenzwischenraum 5 der (herkömmlich bekannten) Doppelscheiben-Anordnung eine Zwischenscheibe 3 gemäß dem Vorbild der Außen- und Innenscheiben-Anordnung installiert. Diese Zwischenscheibe 3 ist flächenparallel den (vertikalen) Scheibenflächen der Außen- und Innenscheibe 1, 2 positioniert, die weitestgehend flächendeckend als ein optischer Linsenkörper ausgebildet ist.

Außerdem ist diese Zwischenscheibe 3 mit einem weitestgehend als Fresnel-Linse ausgebildetem Scheibenkörper umgesetzt. Sie ist mit einem flachen Scheibenkörper realisiert, der beipielgemäß nahe an der Innenscheibe 2 angeordnet, wobei der (ebenfalls - nach dem Vorbild der Außen- und Innenscheibe 1, 2 - kreisrund ausgeführte) Scheibenkörper umfänglich (randseitlich) gegen die Fensterdichtung 4 drückt bzw. letzterer vertikal aufsitzend befestigt ist, die wiederum gegen den inneren Umfang des Türfensterrahmens, genauer gegen die vorgenannte Schenkelauflage dichtet.

Es wäre durchaus denkbar, sofern die Technologie zur Herstellung optischer Folien zulässt, dass der nehmliche Scheibenkörper der Zwischenscheibe 3 mit einer optischen Linsenfolie realisiert ist, die auf der dem Scheibenzwischenraum 5 zugewandten Innenfläche der Innenscheibe 2 (einfacherweise) aufgeklebt ist.

Ansonsten wird (sehr wahrscheinlich) eine Zwischenscheibe 3, die aus einem gegossenen Acrylglas (sogenanntem PMMA) besteht, als Scheibenkörper verwendet werden.

Der Scheibenkörper der Zwischenscheibe ist ein mit der Fresnel-Linse umgesetzter lichtdurchlässiger Körper, der ein nach außerhalb der Flugzeugumgebung und gleichfalls ein nach unterhalb des Flugzeugtürfensters zur untengelegenen Rumpfsektion oder zu den im Türbereich angedockten Ausstiegs- oder Rettungsmittel abgelenktes Sichtfeld des Beobachters mit ausreichender Sicht abbildet.

Zusammenfassend läßt sich folgendes resümieren. Wie bekannt - basieren konventionelle Türfenster im Passagier-Flugzeugbau auf einem Doppelscheiben-Aufbau (Fail Safe Bauweise). Danach wird zwischen einer Außen- und einer Innenfensterscheibe 1, 2 ein Hohlraum gebildet, innerhalb dem eine Zwischenscheibe 3 scheibenflächenparallel angeordnet wird. Um einen Druckausgleich im genannten Hohlraum während des Steig- und Sinkfluges eines Verkehrs- bzw. Passagierflugzeuges umzusetzen, befindet sich eine Ausgleichsbohrung 6 an der Unterseite der Innenscheibe 2. Diese Ausgleichsbohrung 6 wird auch in diesem Bereich der Zwischenscheibe 3 ausgenommen, die (vorteilhafterweise) eigentlich in Verlängerung von deren Lochachse in die Zwischenscheibe 3 eingelassen ist. Diese genannten drei Fensterscheiben sind mit einer (gegen den Scheibenumfang dichtenden) Fensterdichtung 4 verbunden. Aus Sicherheitsgründen wird im Flugzeugbau vorgeschrieben, dass einerseits vor dem Öffnen der Flugzeugtür eine an das Flugzeug (von außerhalb) angelegte Treppe oder ein Board-Finger und andererseits eine (außerhalb des Flugzeuges positionierte) Notrutsche von den Flugbegleitern einsehbar sein muß. Bei Passagierflugzeugen, deren Fußböden in Relation zur Außenkontur sehr hoch angeordnet sind, ist das aufgrund des stark negativen Konturverlaufes und der daraus resultierenden Fenstemeigung nicht möglich. Hinsichtlich bekannter Lösungen und deren Nachteile wurde sich dazu einleitend geäußert.

Abgestellt werden diese Mängel mit einer dritten zusätzlichen Scheibe, die als Zwischenscheibe 3 mit einer Ventilationsbohrung 6 erwähnt wird. Letztere ist innerhalb dem eingeschlossenen Scheibenzwischenraum 5 angeordnet. Diese dritte Scheibe kann aus gegossenem Acrylglas (PMMA) bestehen, weil von ihr keine mechanischen Lasten aufzunehmen sind. Diese sogenannte Zwischenscheibe 3 ist als Linse ausgeführt, mit der das angegeben Problem vorteilhaft abgestellt wird. Aus Gründen der Gewichtsbeeinflußung wird hierfür eine Fresnel-Linse zur Anwemdung vorgeschlagen. Letztere bewirkt (durch die Lichtbrechung von einfallendem Licht) eine ausreichende Sicht nach unterhalb der Rumpfsektion im Flugzeugtürbereich.

### Bezugszeichen

- 1: Außenscheibe
- 2: Innenscheibe
- 3: Zwischenscheibe
- 4: Fensterdichtung
- 5: Scheibenzwischenraum
- 6: Ausgleichsbohrung

## Patentansprüche

1. Flugzeugtürfenster eines Verkehrsflugzeuges, bei dem eine Außenscheibe (1) und eine Innenscheibe (2), die scheibenumfänglich innerhalb einem Türfensterrahmen aufliegen, einen hohlen Scheibenzwischenraum (5) einschließen, wobei am Umfang der beiden Fensterscheiben eine Fensterdichtung (4) befestigt ist, die auf dem inneren Umfang des Türfensterrahmens platziert ist, welche gegen den Fensterscheibenrand und gegen den Türfensterrahmen luftundurchlässig dichtet,
**dadurch gekennzeichnet, dass** innerhalb dem Scheibenzwischenraum (5) eine Zwischenscheibe (3), die weitestgehend flächendeckend als ein optischer Linsenkörper ausgebildet ist, angeordnet ist, welche flächenparallel den Scheibenflächen derAußen- und Innenscheibe (1, 2) positioniert ist.

2. Flugzeugtürfenster nach Anspruch 1, **dadurch gekennzeichnet, dass** die Zwischenscheibe (3) mit einem weitestgehend als Fresnel-Linse ausgebildetem Scheibenkörper umgesetzt ist.

3. Flugzeugtürfenster nach den Ansprüchen 1 und 2, **dadurch gekennzeichnet, dass** die Zwischenscheibe (3) mit einem flachen Scheibenkörper realisiert ist, der nahe an der Innenscheibe (2) angeordnet ist und dem randseitlich auch die Fensterdichtung (4), welche gegen den inneren Umfang des Türfensterrahmens dichtet, befestigt ist.

4. Flugzeugtürfenster nach Anspruch 3, **dadurch gekennzeichnet, dass** der Scheibenkörper der Zwischenscheibe (3) mit einer optischen Linsenfolie realisiert ist, die auf der dem Scheibenzwischenraum (5) zugewandten Innenfläche der Innenscheibe (2) geklebt ist.

5. Flugzeugtürfenster nach Anspruch 1, **dadurch gekennzeichnet, dass** die Zwischenscheibe (3) ein aus gegossenem Acrylglas (PMMA) bestehender Scheibenkörper ist

6. Flugzeugtürfenster nach den Ansprüchen 1 und 2, **dadurch gekennzeichnet, dass** der Scheibenkörper der Zwischenscheibe (3) ein mit der Fresnel-Linse umgesetzter lichtdurchlässiger Körper ist, der ein nach außerhalb der Flugzeugumgebung und gleichfalls ein nach unterhalb des Flugzeugtürfensters zur untengelegenen Rumpfsektion oder zu den im Türbereich angedockten Ausstiegs- oder Rettungsmittel abgelenktes Sichtfeld des Beobachters mit ausreichender Sicht abbildet.
